**Europäisches Patentamt**

**European Patent Office**

**Office européen des brevets**

(11) Veröffentlichungsnummer: **0 163 152**
**B1**

(12) **EUROPÄISCHE PATENTSCHRIFT**

(45) Veröffentlichungstag der Patentschrift:
07.01.88

(21) Anmeldenummer: **85105260.5**

(22) Anmeldetag: **30.04.85**

(51) Int. Cl.⁴: **F 16 B 13/12**

(54) Dübel.

(30) Priorität: **01.06.84 DE 3420375**

(43) Veröffentlichungstag der Anmeldung:
**04.12.85 Patentblatt 85/49**

(45) Bekanntmachung des Hinweises auf die Patenterteilung:
**07.01.88 Patentblatt 88/1**

(84) Benannte Vertragsstaaten:
**AT BE CH FR GB IT LI NL SE**

(56) Entgegenhaltungen:
**CH - A - 581 277**
**CH - A - 606 834**

(73) Patentinhaber: **fischerwerke Artur Fischer GmbH & Co. KG, Weinhalde 14-18,
D-7244 Tumlingen/Waldachtal 3 (DE)**

(72) Erfinder: **Fischer, Arthur, Dr., Weinhalde 34,
D-7244 Waldachtal 3/Tumlingen (DE)**
Erfinder: **Onasch, Jürgen, Dr., Haydnstrasse 49,
D-5300 Bonn-1 (DE)**
Erfinder: **Haage, Manfred, Würmstrasse 6,
D-7033 Herrenberg-Oberjesingen (DE)**

ACTORUM AG

## Beschreibung

Die Erfindung betrifft einen Dübel mit Spreizhülse, einem in die Spreizhülse mittels einer ein Gegenlager mit Angriffsflächen zum Aufbringen eines Drehmomentes aufweisenden Schraube einziehbaren, mit einem kegelförmigen Spreizkonus versehenen Spreizkörper, und einer zwischen Spreizhülse und Gegenlager angeordneten, vorzugsweise durch eine Kunststoffhülse gebildeten Stauchzone.

Dübel der obengenannten Art werden in der Weise verankert, dass der Spreizkörper in die Spreizhülse hineingezogen wird, wobei sich die Spreizhülse entweder unmittelbar oder über eine Distanzhülse am Gegenlager der Schraube abstützt. Der Spreizkörper kann über eine Gewindeverbindung mit der Schraube verbunden sein, oder er kann an einen Gewindebolzen angestaucht sein, der dann als Gegenlager eine Schraubenmutter aufweist.

Der Einsatz solcher Dübel in der Zugzone eines Ankergrundes erfordert ein hohes Nachspreizvermögen, um bei der Erweiterung des Bohrloches durch Rissbildung eine Abminderung des Haltewertes zu vermeiden. Ein gutes Nachspreizen kann durch einen flachen Spreizkonuswinkel erreicht werden. Allerdings wird bei einem flachen Spreizkonus die Festigkeit des Ankergrundes nicht voll ausgenutzt, da schon vorzeitig der Spreizkörper durch die Spreizhülse hindurchgezogen wird. Dieser Effekt tritt noch früher auf, wenn sich das Bohrloch durch einen Riss gegenüber dem ursprünglichen Bohrlochmass erweitert hat.

Bei einem sehr steilen Spreizkonuswinkel wiederum besteht die Gefahr, dass der Dübel nur unzureichend aufgespreizt werden kann, weil das zum Einziehen des Spreizkörpers notwendige hohe Drehmoment wegen Überlastung der Schraube nicht aufgebracht werden kann. Das Versagen einer solchen Verankerung beruht in der Regel darauf, dass das gesamte Element wegen der ungenügenden Spreizung aus dem Bohrloch ausgezogen wird.

Der Erfindung liegt daher die Aufgabe zugrunde, einen Dübel zu schaffen, der ein hohes Nachspreizvermögen einerseits und rissunempfindliche hohe Auszugskräfte anderseits aufweist.

Erfindungsgemäss wird dies dadurch erreicht, dass sich an den grössten Durchmesser des kegelförmigen Spreizkonus tangential ein konkav gewölbter Abschnitt anschliesst, wobei die am Auslauf des gewölbten Abschnittes angelegte Tangente zur Mittelachse des Dübels einen Winkel bildet, der etwa dem zweifachen des Winkels des kegelförmigen Spreizkonus entspricht.

Nach dem Einsetzen des erfindungsgemässen Dübels in ein vorbereitetes Bohrloch im Ankergrund wird durch Drehen der Schraube der Spreizkörper in axialer Richtung bewegt und in die Spreizhülse eingezogen. Durch den zunächst in Eingriff kommenden, einen flachen Winkel aufweisenden kegelförmigen Spreizkonus wird schon durch ein geringes Anzugsmoment ein hoher radialer Pressdruck erzeugt, der ein Mitdrehen des Dübels im Bohrloch verhindert. In einem engen Bohrloch wird das maximale Anzugsmoment bei einer Stellung erreicht, bei der sich die Spreizlamelle der Spreizhülse noch auf dem kegelförmigen Spreizkonus befinden. Bei grösseren Bohrlöchern wird bei gleichem Anzugsmoment der Spreizkörper so weit in die Spreizhülse eingezogen, bis durch die konvexe Wölbung des Spreizkörpers und dem damit verbundenen Anstieg des Spreizwinkels eine stärkere Aufspreizung erreicht ist. Bei hoher Belastung wird der Spreizkörper weiter in die Spreizhülse eingezogen, wobei aufgrund des ständig zunehmenden Spreizwinkels eine Verstärkung der Aufspreizung eintritt. Durch den von dem kegelförmigen Spreizkonus bis zum Auslauf des konkav gewölbten Abschnittes des Spreizkörpers auf den doppelten Wert ansteigenden Spreizwinkel ergibt sich ein der jeweiligen Bohrlochgeometrie angepasster optimaler Verankerungszustand. Aufgrund dieser Anpassungsmöglichkeit ist der erfindungsgemässe Dübel rissunempfindlich, da durch Nachrutschen des Spreizkörpers in die Spreizhülse die sich durch den Riss ergebende Bohrlocherweiterung ausgeglichen wird.

Als besonders vorteilhaft hat sich ein Winkel des kegelförmigen Spreizkonus von etwa 6° erwiesen. Der Spreizwinkel am Auslauf des konkav gewölbten Abschnittes des Spreizkörpers beträgt somit etwa 12°.

In einer weiteren Ergänzung der Erfindung kann die Aussenfläche der Spreizhülse von ihrem einführseitigen Stirnende ausgehend eine sich zum rückwärtigen Stirnende hin verjüngende umlaufende Sägezahnrille aufweisen. Durch diese Gestaltung ergibt sich eine Freifläche am einführseitigen Stirnende der Spreizhülse, so dass schon bei einem geringen radialen Pressdruck ein tiefes Eingraben der Vorderkante der Spreizhülse in die Bohrlochwandung erfolgt. Es entsteht somit zusätzlich eine Art Formschluss, da die Spreizhülsenstirnkante bei zunehmender Last einen Hinterschnitt ausformt.

Dieser Effekt kann noch dadurch verbessert werden, dass in weiterer Ergängung der Erfindung in der Aussenfläche der Spreizhülse im Bereich deren einführseitigen Stirnende eine umlaufende Rille angeordnet ist, in der ein den benachbarten Aussendurchmesser der Spreizhülse überragender Federring eingelegt ist. Der an einer Stelle offene, gehärtete Federring gräbt sich aufgrund seiner Festigkeit tief in die Bohrlochwandung ein. Gleichzeitig spannt der Federring die Spreizlamellen fest auf den Spreizkonus, so dass zum einen ein Verhaken der Spreizhülse beim Einführen des Dübels in das Bohrloch vermieden, und zum anderen der Spreizkörper durch die Verspannung mit der Spreizhülse am Mitdrehen gehindert wird.

In weiterer Ausgestaltung der Erfindung kann der Federring eine sich zu seinem rückwärtigen Stirnende hin verjüngende Aussenfläche aufweisen. Durch diese Gestaltung ergibt sich eine besonders günstige Aussenkontur des Federringes für das Eingraben in die Bohrlochwandung.

In der Zeichnung sind Ausführungsbeispiele der Erfindung dargestellt.

Es zeigen:

Fig. 1 den im Bohrloch eingesetzten Dübel;

Fig. 2 den Dübel im Verankerungszustand;

Fig. 3 die Spreizhülse mit einem in einer umlaufenden Rille eingelegten Federring.

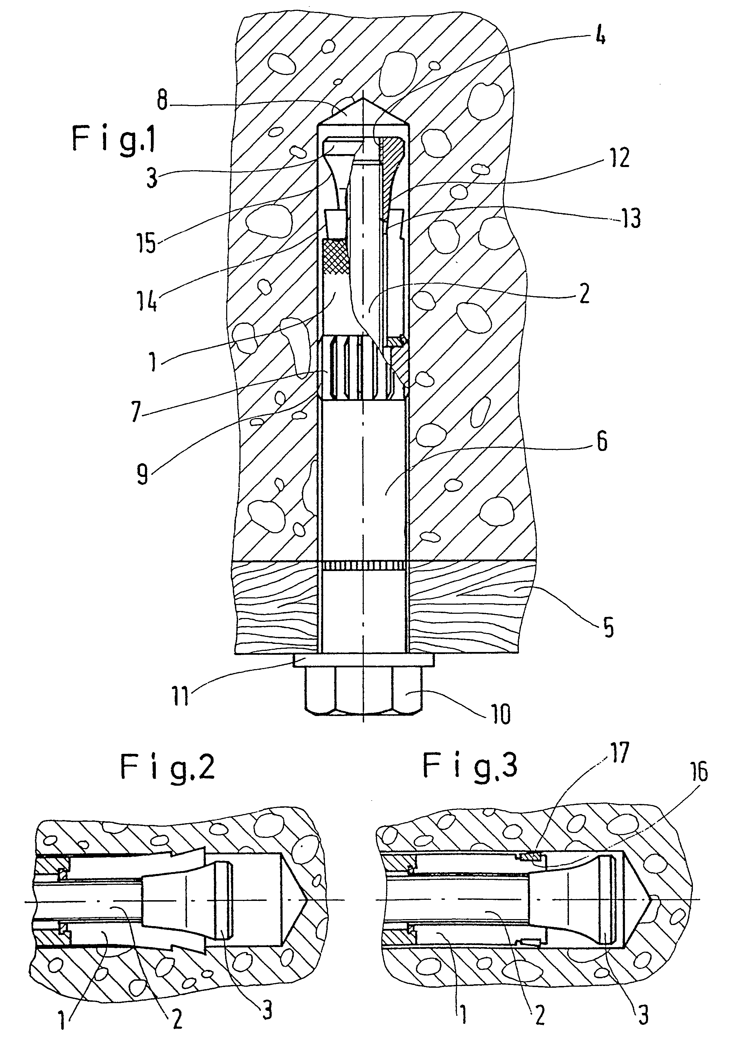

Der Dübel gemäss Fig. 1 besteht aus der von ihrem einführseitigen Stirnende bis über einen Teil ihrer Länge mehrfach geschlitzten Spreizhülse 1, und dem über eine Schraube 2 in die Spreizhülse 1 zu deren Aufweitung einziehbaren Spreizkörper 3. Zur Verbindung des Spreizkörpers mit der Schraube weist der Spreizkörper 3 ein dem Gewinde der Schraube 2 angepasstes Innengewinde 4 auf. Zur Überbrückung von Hohllagen bei der Verspannung des zu befestigenden Gegenstandes 5 ist zwischen der Spreizhülse 1 und einer Distanzhülse 6 als Stauchzone eine Kunststoffhülse 7 angeordnet, die gleichzeitig durch die Verbindung mit der Spreizhülse 1 und den sich im Bohrloch 8 verspannenden Längsrippen 9 als Mitdrehsicherung für die Spreizhülse 1 dient. Als Gegenlager zum Verspannen des zu befestigenden Gegenstandes 5 und zum Einziehen des Spreizkörpers 3 dient der Schraubenkopf 10, der sich über die Unterlagscheibe 11 in der Aussenfläche des zu befestigenden Gegenstandes abstützt. Durch Aufbringung eines Drehmomentes auf den Schraubenkopf 10 wird zunächst der einen Spreizwinkel von ca. 6° aufweisende kegelförmige Spreizkonus 12 des Spreizkörpers 3 in die mit einer dem Spreizwinkel des Spreizkonus entsprechenden Anlaufschräge 13 ausgestatteten Spreizhülse 1 eingezogen. Dabei werden die durch die Längsschlitze gebildeten Spreizlamellen der Spreizhülse radial in die Bohrlochwandung eingepresst. Durch die umlaufende, sich zum rückwärtigen Ende der Spreizhülse hin verjüngende Sägezahnrille 14 an der Aussenfläche der Spreizhülse 1 entsteht eine Freifläche, die schon bei relativ geringen Spreizdruckkräften ein tiefes Eingraben der Spreizlamellen in die Bohrlochwandung erlaubt. Durch den sich an den kegelförmigen Spreizkonus anschliessenden konkav gewölbten Abschnitt 15 des Spreizkörpers 3 erfolgt eine kontinuierliche Zunahme des Spreizwinkels bis zu einem Winkelmass am Auslauf des Abschnittes, das etwa dem zweifachen des Winkelmasses des kegelförmigen Spreizkonus 12 entspricht. Damit wird bei abnehmendem Einzugsweg des Spreizkörpers 3 in die Spreizhülse 1 eine sich verstärkende Aufspreizung erreicht.

Um das Eingraben der Spreizhülse 1 insbesondere bei sehr harten Baustoffen noch zu verbessern, ist gemäss Fig. 3 in der Aussenfläche der Spreizhülse im Bereich deren einführseitigen Stirnende eine umlaufende Rille 16 angeordnet, in der ein gehärterer Federstahlring 17 eingelegt ist. Die Aussenfläche des Federringes 17 ist zu seinem rückwärtigen Stirnende hin verjüngt, so dass sich eine günstige Aussenkontur für das Eingraben in die Bohrlochwandung ergibt. Die Spitze des Federringes überragt als Art Schneidkante den Aussendurchmesser des benachbarten Abschnittes der Spreizhülse 1.

## Patentansprüche

1. Dübel mit Spreizhülse, einem in die Spreizhülse mittels einer ein Gegenlager mit Angriffsflächen zum Aufbringen eines Drehmomentes aufweisenden Schraube einziehbaren, mit einem kegelförmigen Spreizkonus versehenen Spreizkörper, und einer zwischen Spreizhülse und Gegenlager angeordneten, vorzugsweise durch eine Kunststoffhülse gebildeten Stauchzone, dadurch gekennzeichnet, dass sich an den grössten Durchmesser des kegelförmigen Spreizkonus (12) tangential ein kokav gewölbter Abschnitt (15) anschliesst, wobei die am Auslauf des gewölbten Abschnittes (15) angelegte Tangente zur Mittelachse des Dübels einen Winkel bildet, der etwa dem zweifachen des Winkels des kegelförmigen Spreizkonus (12) entspricht.

2. Dübel nach Anspruch 1, dadurch gekennzeichnet, dass der Winkel des kegelförmigen Spreizkonus (12) etwa 6° beträgt.

3. Dübel nach Anspruch 1, dadurch gekennzeichnet, dass die Aussenfläche der Spreizhülse (1) von ihrem einführseitigen Stirnende ausgehend eine sich zum rückwärtigen Stirnende hin verjüngende umlaufende Sägezahnrille (14) aufweist.

4. Dübel nach Anspruch 1, dadurch gekennzeichnet, dass in der Aussenfläche der Spreizhülse (1) im Bereich deren einführseitigen Stirnende eine umlaufende Rille (16) angeordnet ist, in der ein den benachbarten Aussendurchmesser der Spreizhülse (1) überragender Federring (17) eingelegt ist.

5. Dübel nach Anspruch 4, dadurch gekennzeichnet, dass der Federring (17) eine sich zu seinem rückwärtigen Stirnende hin verjüngende Aussenfläche aufweist.

## Claims

1. Wall plug with expansible sleeve, an expansion section which is provided with a tapered expander cone and is capable of being drawn into the expansible sleeve by means of a screw which has a countermember with engageable surfaces for the application of a turning moment, and a compression zone, preferably formed by a plastics sleeve, arranged between the expansible sleeve and the counter-member, characterised in that, tangentially adjoining the largest diameter of the tapered expander cone (12) is a concavely curved portion (15), wherein the tangent applied to the end of the curved portion (15) forms an angle to the central axis of the wall plug that corresponds approximately to twice the angle of the tapered expander cone (12).

2. Wall plug according to claim 1, characterised in that the angle of the tapered expander cone (12) is approximately 6°.

3. Wall plug according to claim 1, characterised in that, starting from its insertion end, the outer surface of the expansible sleeve (1) has a circumferential saw-tooth groove (14) tapering towards the rear end.

4. Wall plug according to claim 1, characterised in that, in the outer surface of the expansible sleeve (1) in the region of the insertion end thereof, there is arranged a circumferential groove (16) in which is inserted a spring ring (17) projecting beyond the adjacent external diameter of the expansible sleeve (1).

5. Wall plug according to claim 4, characterised in that the spring ring (17) has an outer surface tapering towards the rear end thereof.

## Revendications

1. Boulon d'ancrage comportant une douille expansible, un corps écarteur, qui peut être enfoncé par traction dans cette douille au moyen d'une vis comportant une butée à surfaces d'appui destinée à créer un couple de rotation, ce corps comportant un cône écarteur, et une zone de refoulement située entre cette douille expansible et cette butée et formée avantageusement par une douille en matière plastique, boulon caractérisé en ce qu'une partie (15) concave arrondie se raccorde tangentiellement à l'extrémité de plus grand diamètre du cône écarteur (12), la tangente à l'extrémité de cette partie (15) concave faisant avec l'axe du boulon un angle qui correspond sensiblement au double de l'angle de ce cône (12).

2. Boulon d'ancrage selon la revendication 1, caractérisé en ce que l'angle du cône écarteur est égal à sensiblement 6°.

3. Boulon d'ancrage selon la revendication 1, caractérisé en ce que la surface extérieure de la douille expansible (1) présente une gorge périphérique (14) en dents de scie qui part de son extrémité d'insertion et dont le diamètre diminue vers son extrémité postérieure.

4. Boulon d'ancrage selon la revendication 1, caractérisé en ce qu'il est formé dans la surface extérieure de la douille expansible (1), près de son extrémité d'insertion, une gorge périphérique (16) dans laquelle est logée une bague élastique (17) faisant saillie du diamètre extérieur des parties adjacentes de cette douille.

5. Boulon d'ancrage selon la revendication 4, caractérisé en ce que la bague élastique (17) présente une surface extérieure dont le diamètre diminue vers son extrémité postérieure.

Fig.1

Fig.2

Fig.3